# EUROPÄISCHE PATENTSCHRIFT

(11) **EP 1 521 801 B1**
(45) Veröffentlichungstag und Bekanntmachung des Hinweises auf die Patenterteilung: **02.11.2005**
(21) Anmeldenummer: 03740379.7
(22) Anmeldetag: 30.06.2003
(51) Int. Cl.: C08K 3/06, C08L 21/00, C08K 9/08

(54) **VERFAHREN ZUR VULKANISIERUNG VON KAUTSCHUK ODER LATEX DURCH APPLIKATION EINER MISCHUNG AUS SCHWEFEL UND KOMPLEXBILDNER**
METHOD FOR VULCANIZING CAOUTCHOUC OR LATEX BY APPLYING A MIXTURE OF SULFUR AND A COMPLEXING AGENT
PROCEDE DE VULCANISATION DE CAOUTCHOUC OU DE LATEX PAR L'APPLICATION D'UN MELANGE DE SOUFRE ET D'AGENT COMPLEXANT

(30) Priorität: 08.07.2002 DE 10230801
(43) Veröffentlichungstag der Anmeldung: 13.04.2005
(73) Patentinhaber: BASF Aktiengesellschaft, 67056 Ludwigshafen (DE)
(72) Erfinder: TIDOW, Jörn, 68723 Schwetzingen (DE); SCHOLZ, Herbert, 67434 Neustadt (DE); NIMTZ, Fritz, 69181 Leimen (DE); STANG, Michael, 67069 Ludwigshafen (DE); DANNER, Thomas, 67167 Erpolzheim (DE); PARG, Adolf, 67098 Bad Dürkheim (DE); FÖRSTER, Rolf, 67433 Neustadt/Wstr. (DE); SCHNEIDER, Karl-Heinrich, 67271 Kleinkarlbach (DE); STERZEL, Hans-Josef, 67125 Dannstadt-Schauernheim (DE); ALBERT, Bernhard, 67157 Wachenheim (DE)
(86) Internationale Anmeldenummer: PCT/EP2003/006894
(87) Internationale Veröffentlichungsnummer: WO 2004/005386

(56) Entgegenhaltungen:
- DD-A- 286 343
- GB-A- 826 161
- GB-A- 1 396 757
- US-A- 3 012 985

## Beschreibung

Die vorliegende Erfindung betrifft Verfahren zur Vulkanisierung von Kautschuk oder Latex durch Zusatz einer Mischung M, enthaltend eine Komponente a) aus a1) 20 bis 96 Gew.-% Schwefel, a2) 4 bis 80 Gew.-% eines Komplexbildners und gegebenenfalls weitere Zusatzstoffe b); sowie die Verwendung einer Mischung M zur Vulkanisierung von Kautschuk oder Latex sowie vulkanisierter Kautschuk oder Latex erhältlich durch das erfindungsgemäße Verfahren.

Die Vulkanisierung von Kautschuk oder Latex mit elementarem Schwefel ist bekannt (Ullmanns Encyklopädie der technischen Chemie, 4. Auflage, Band 13, Verlag Chemie Weinheim, New York 1977, Seiten 639 bis 640 und Ullmanns Encyklopädie der technischen Chemie, 3. Auflage, Band 9, Urban & Schwarzenberg, München, Berlin 1957, Seite 352.).

Bei der Vulkanisierung von Kautschuk wird üblicherweise feinkörniger, auch mit Dispergatoren (z.B. Öle) behandelter Schwefel an sich oder Schwefelpaste eingesetzt, wobei jeweils die Primärteilchengröße bei ca. 45 µm liegt.

Bei der Vulkanisierung von Latex wird üblicherweise eine schwefelhaltige Dispersion verwendet, welche durch Vermahlen von Schwefel mit einem Dispergiermittel (z.B. β-Naphthalinsulfonsäure-Formaldehydkondensat) erhalten werden kann, wobei man eine Primärteilchengröße von ca. 45 µm erzielt.

Desweiteren kann für die Latexvulkanisierung mit Schwefel noch Kolloidschwefel verwendet werden, welcher eine Primärteilchengröße von ca. 10 µm hat.

Das an sich bekannte Vulkanisierverfahren des Kautschuks oder Latex läuft üblicherweise so ab, daß zuerst der Schwefel oder die schwefelhaltige Mischung durch Mahlen in die geeignete Teilchengröße übergeführt wird, dann, gegebenenfalls zusammen mit weiteren Zusatzstoffen, wie Vulkanisationsbeschleuniger.etc. (siehe Ullmanns Encyklopädie der technischen Chemie, 4. Auflage, Band 13, Verlag Chemie Weinheim, New York 1977, Seiten 639 ff) dem zu vulkanisierenden Kautschuk oder Latex zugesetzt wird und dann die Vulkanisierbedingungen, die ebenfalls bekannt sind, eingestellt werden, so daß die Vulkanisierung stattfindet.

Bei all diesen Verfahren ist eine gleichmäßige Verteilung des Schwefels Voraussetzung für ein gutes Eigenschaftsbild des vulkaisierten Gummis.

Ein Nachteil der bekannten Schwefel-Zerkleinerungsverfahren des Standes der Technik ist jedoch, daß staubender Schwefel gehandhabt werden muß, oder daß Schwefelstaub als Bearbeitungsprodukt anfällt. Dies ist ein, vor.allem unter dem Gesichtspunkt des Expolsionsschutzes, kritischer Aspekt des Vulkanisierverfahrens. Desweiteren können feinstpartikuläre Schwefelstäube in die Lunge eindringen und möglicherweise gesundheitliche Schäden verursachen, so daß es auch auch unter dem Gesichtspunkt des Gesundheitschutzes wünschenswert ist nichtstaubenden Schwefel bereitzustellen.

Eine Möglichkeit zur Vermeidung des Schwefelstaubproblems beim Anwender ist die Verwendung von sogenanntem "polymergebundenen" Schwefel (siehe z.B. die Patentschrift DD-A5-286 343). Dieser hat jedoch den Nachteil, daß er nicht frei-fließend ist und sich dadurch schlecht in den Vulkanisierungsanlagen fördern läßt; weiterhin läßt sich "polymergebundener" Schwefel zur Vulkanisierung nur in Kautschukmischungen einsetzen, nicht in Latex, da er sich wegen seines polymeren Characters nicht in der wässrigen Latexmischung löst oder dispergiert.

Der vorliegenden Erfindung lag daher die Aufgabe zugrunde ein Vulkanisierverfahren für Kautschuk oder Latex zu entwickeln, in welchem der Vulkanisierschwefel so vorliegt, daß er homogen im Kautschuk oder Latex verteilt wird, wobei dieser Schwefel jedoch praktisch nicht staubt und somit, vor allem unter dem Gesichtspunkt des Explosionsschutzes, unkritisch zu handhaben ist.

Demgemäß wurde ein Verfahren zur Vulkanisierung von Kautschuk oder Latex durch Zusatz einer Mischung M, enthaltend eine Komponente a) aus
a1) 20 bis 96 Gew.-% Schwefel,
a2) 4 bis 80 Gew.-% eines Komplexbildners
und gegebenenfalls weitere Zusatzstoffe b) zu Kautschuk oder Latex und anschließender Durchführung der Vulkanisierung, dadurch gekennzeichnet, daß die mittlere Teilchengröße der Komponente a) im Bereich von 0,05 bis 20 µm liegt; die Verwendung einer Mischung M - wie in den Ansprüchen 1 bis 6 definiert - als Mittel zur Vulkanisierung von Kautschuk oder Latex; sowie vulkanisierter Kautschuk oder Latex erhältlich durch das Verfahren gemäß Anspruch 1 bis 6 gefunden.

Die Natur des in der erfindungsgemäßen Mischung enthaltenen Schwefels ist nicht kritisch. Es kann jeglicher elementare Schwefel verwendet werden, der lang bekannt ist, ausgiebig beschrieben wurde und als kommerzielles Produkt gehandelt wird. Gut geeignet ist beispielweise der aus Erdgasreinigungsanlagen erhältliche Schwefel.

Die Menge des Schwefels a1) in der erfindungsgemäßen Komponente a) liegt im Bereich von 20 bis 96 Gew-%, vorzugsweise 70 bis 95 Gew.-% und insbesondere 75 bis 85 Gew.-%, jeweils bezogen auf das Gesamtgewicht der Komponente a).

Als Komplexbildner a2) kommen nicht-polymere Komplexbildnerverbindungen, vorzugsweise jedoch polymere Komplexbildnerverbindungen in Frage. Der Komplexbildner a2) kann sowohl die reinen Komplexbildnerverbindungen als auch jegliche Mischungen der reinen Komplexbildnerverbindungen enthalten, wobei das Mischungsverhältnis nicht kritisch ist.

Als nicht-polymere Komplexbildnerverbindungen kommen in Frage EDTA (Ethylendiamintetraessigsäure), NTA (Nitrilotriessigsäure), EDDHA (Ethylendiamindi (ortho-hydroxyphenyl)essigsäure), DTPA (Diethylentriaminpentaessigsäure), HEDTA (Hydroxyethylendiamintriessigsäure), vorzugsweise Ethylendiamintetraessigsäure und/oder Diethylentriaminpentaessigsäure.

Als polymere Komplexbildnerverbindungen kommen in Frage Polyacrylsäure und ihre Salze, insbesondere Na-Salze, Polymethacrylsäure und ihre Salze, insbesondere Na-Salze; Polymaleinsäure, hergestellt z.B. durch Verseifung von Polymaleinsäureanhydrid, insbesondere Na-Salze; Polyvinylpyrrolidon, Copolymere aus Acrylsäure und Maleinsäure, insbesondere Na-Salze, Copolymere aus Vinylpyrrolidon und Vinylacetat; Graft-copolymere aus Vinylpyrrolidon und C₂₀ α-Olefin; Copolymere aus Vinylpyrrolidon und Acrylsäure; Copolymere aus Vinylpyrrolidon und Dimethylaminoethylacrylat; Copolymere aus Methylvinylether und Maleinsäureanhydrid(derivaten); Copolymere aus Styrol und Maleinsäureanhydrid; Polyasparaginsäure und ihre Salze; Poly-p-vinylbenzolsulfonsäure und ihre Salze; Copolymere aus Ethylen und/oder Propylen und/oder Isobuten und (Meth)Acrylsäure; modifizierte Stärken; modifizierte Cellulosen, z.B. Carboxymethylcellulose; Alginate; Ligninderivate wie Ligninsulfonate; Chitosane; modifizierte Polysaccharide; Phenolsulfonsäure Formaldehydkondensate; Naphthalinsulfonsäure Formaldehydkondensate.

Vorzugsweise werden als polymere Komplexbildnerverbindungen a2) verwendet Ligninsulfonate; Naphthalinsulfonsäure-Formaldehydkondensate, Polyacrylsäure und ihre Salze, insbesondere Na-Salze; Polymethacrylsäure und ihre Salze, insbesondere Na-Salze; Polymaleinsäure oder deren Salze, hergestellt z.B. durch Verseifung von Polymaleinsäureanhydrid, insbesondere Na-Salze; Copolymere aus Acrylsäure und Maleinsäure, insbesondere Na-Salze; Polyacrylate; Polyaspartate und andere Polyaminosäuren. Insbesondere werden als polymere Komplexbildnerverbindungen verwendet Ligninsulfonate und/oder β-Naphthalinsulfonsäure-Formaldehydkondensate.

Ligninsulfonate sind bekannt und werden beispielsweise in Römpp Chemilexikon, 9. Auflage, Band 3, Georg-Thieme Verlag, Stuttgart, New York 1990, Seite 2511 definiert. Gut geeignete Ligninsulfonate sind die Alkali- und/oder Erdalkalisalze und/oder Ammoniumsalze, beispielsweise die Ammonium-, Natrium-, Kalium-, Calcium- oder Magnesiumsalze der Ligninsulfonsäure. Bevorzugt werden die Natrium-, Kalium- oder Calciumsalze verwendet, ganz besonders bevorzugt die Natrium- und/oder Calciumsalze.

Selbstverständlich umfaßt der Begriff Ligninsulfonate auch Mischsalze verschiedener Ionen, wie Kalium-/Natriumligninsulfonat, Kalium-/Calciumligninsulfonat oder ähnliche, insbesondere Natrium-/Calciumligninsulfonat.

Naphthalinsulfonsäure-Formaldehydkondensate sind ebenfalls bekannt und beispielsweise als Tamol®-Produkte der BASF Aktiengesellschaft im Handel.

Die Menge des Kationenkomplexbildners a2) in der erfindungsgemäßen Komponente a) liegt im Bereich von 4 bis 80 Gew-%, vorzugsweise 5 bis 30Gew.-% und insbesondere 15 bis 25 Gew.-%, jeweils bezogen auf das Gesamtgewicht der Komponente a).

Wird eine Mischung aus Ligninsulfonat und Naphthalinsulfonsäure-Formaldehydkondensat als Komponente a2) verwendet, so liegt der Anteil des Ligninsulfonats in dieser Mischung üblicherweise im Bereich von 10 bis 90 Gew.-% und der Anteil des Naphthalinsulfonsäure-Formaldehydkondensat in dieser Mischung komplementär im Bereich von 90 bis 10 Gew.-%.

Besonders gut geeignete erfindungsgemäße Komponenten a) sind solche aus 75 bis 85 Gew.-% Schwefel und 15 bis 25 Gew.-% Ligninsulfonat.

Beispiele für erfindungsgemäße Komponenten a) sind: 95 Gew.-% Schwefel + 5 Gew.-% Natriumligninsulfonat; 90 Gew.-% Schwefel + 10 Gew.-% Natriumligninsulfonat; 80 Gew.-% Schwefel + 20 Gew.-% Natriumligninsulfonat; 75 Gew.-% Schwefel + 25 Gew.-% Natriumligninsulfonat; 95 Gew.-% Schwefel + 5 Gew.-% Kaliumligninsulfonat; 90 Gew.-% Schwefel + 10 Gew.-% Kaliumligninsulfonat; 80 Gew.-% Schwefel + 20 Gew.-% Kaliumligninsulfonat; 95 Gew.-% Schwefel + 5 Gew.-% Calciumligninsulfonat; 90 Gew.-% Schwefel + 10 Gew.-% Calciumligninsulfonat; 80 Gew.-% Schwefel + 20 Gew.-% Calciumligninsulfonat; 75 Gew.-% Schwefel + 25 Gew.-% Naphthalinsulfonsäure-Formaldehydkondensat; 80 Gew.-% Schwefel + 20 Gew.-% Naphthalinsulfonsäure-Formaldehydkondensat; 90 Gew.-% Schwefel + 10 Gew.-% Naphthalinsulfonsäure-Formaldehydkondensat; 95 Gew.-% Schwefel + 5 Gew.-% Naphthalinsulfonsäure-Formaldehydkondensat.

Die Herstellung der erfindungsgemäßen Mischung M, bzw. der Komponente a) kann durch Mischen, Zerkleinern, Trocken, beispielsweise Sprühtrocknen, erfolgen. Die Komponente a) wird bevorzugt mittels Sprühtrocknen erhalten.

In der Regel, vorzugsweise jedoch nach dem Sprühtrocknen, liegt die erfindungsgemäße Mischung M bzw. die Komponente a) rieselfähig in mikro-granulären Partikeln mit einer mittleren Teilchengröße - bestimmt mit der Siebanalysenmethode nach CIPAC MT 170 (CIPAC Handbook F - Page 420 - Dry Sieve Analysis of Waterdispersible Granules) im Bereich von 50 µm bis 4 mm, vorzugsweise im Bereich von 100 µm bis 2 mm vor, deren Primärteilchen einen mittleren Teilchendurchmesser im Bereich von 0,05 bis 20 µm, vorzugsweise im Bereich von 0,1 bis 15 µm, insbesondere im Bereich von 0,5 bis 8 µm haben (bestimmt mit der Methode ISO 13320-1: 1999 (Particle Size Analysis - Laser Diffraction Methods).

Die erfindungsgemäße Mischung M kann außer der Komponente a) weitere Zusatzstoffe b) enthalten.

Als weitere Zusatzstoffe b) der Mischung M kommen die für die Schwefelvulkanisierung üblichen in Frage, zum Beispiel Vulkanisationsbeschleuniger oder -verzögerer, Alterungs- und Ermüdungsschutzmittel, Füllstoffe, Pigmente, Weichmacher etc; Näheres findet man in Ullmanns Encyklopädie der technischen Chemie, 4. Auflage, Band 13, Verlag Chemie Weinheim, New York 1977, Seiten 639 ff.).

Die erfindungsgemäße Mischung M kann in den üblichen Anwendungsformen für Schwefel-Vulkanisiermischungen eingesetzt werden (vgl. das eingangs Gesagte). Üblicherweise wird die erfindungsgemäße Mischung M pur als rieselfähiges, freifließendes, antistatisches, wasserdispergierbares Mikrogranulat, in wässriger Dispersion oder auch als Paste eingesetzt, je nachdem ob fester Kautschuk oder flüssiger Latex vulkanisiert werden soll.

Ein Vorteil der erfindungsgemäßen Mischung M ist, daß sie, obwohl sie sehr kleine Primärteilchen enthält, bei der Zubereitung der Vulkanisiermischung oder bei deren Einsatz nicht staubt und sich trotzdem homogen im zu vulkanisierenden Kautschuk oder Latex verteilt und vulkanisierten Gummi mit guten Eigenschaften liefert.

Ein besonderer Vorzug der erfindungsgemäßen Mischung M ist, daß sie sich beispielsweise in Wasser sehr gut dispergieren (suspendieren) läßt, das heißt, daß sich die erfindungsgemäße Mischung in überschaubaren Zeiträumen nicht in der wässrigen Dispersion (Suspension) absetzt und/oder, beispielsweise auf der Oberfläche separiert ("ausrahmt"). Ein gutes Maß für diese Dispergierbarkeit (Suspendierbarkeit) ist die sogenannte Schwebefähigkeit nach CIPAC MT 168 (CIPAC Handbook F - Page 427 - Determination of Suspension Stability of Waterdispersible Granules). Üblicherweise liegt die Schwebefähigkeit der wässrigen Dispersionen (Suspensionen) welche die erfindungsgemäße Mischung M enthalten bei 50 bis 100%, vorzugsweise bei 70 bis 100%.

### Beispiele

Es wurde Naturkautschuk mit der erfindungsgemäßen Schwefelmischung und weiteren Additiven gemischt und dann vulkanisiert. Der vulkanisierte Kautschuk wurde dann untersucht. Bei der Herstellung dieser Schwefel-/Kautschukmischung wurde beobachtet, daß die freifließende, staubfreie erfindungsgemäße Schwefelmischung sich wesentlich schneller in die Kautschukmischung einarbeiten läßt als konventionelle Schwefelagenzien.

Die mechanischen Eigenschaften der Vulkanisate dieser erfindungsgemäßen Mischung weisen gute Werte auf (siehe Tabelle).

Die geringe Staubeigenschaft der erfindungsgemäßen Schwefelmischung wurde mit der Dust-View Methode der Firma Pallas, Karlsruhe gemessen; es ergaben sich für die erfindungsgemäße Mischung Werte von ca. 7, im Vergleich lieferte ein handelsüblicher Kolloidschwefel im selben Test einen Wert von 97.

**Tabelle H 294**

| Prüfmischung: | | [phr]¹⁾ |
|---|---|---|
| NR CV 40 (Natural Rubber) | | 100 |
| Stearinsäure | | 1 |
| Alterungsschutzmittel IPPD | | 0,75 |
| Alterungsschutzmittel SDPA | | 1 |
| Ruß N 330 | | 50 |
| Zinkoxid | | 8 |
| | | |
| Schwefel, gemahlen | | - |
| gecoateter Mahlschwefel (95 %) | | - |
| unlöslicher Schwefel (80 %) | | - |
| Polymergebundener Schwefel (80 %) | | - |
| Erfindungsgemäße Schwefelmischung (95 Gew.-% Schwefel + 5 Gew.-% β-Naphthalinsulfonsäure-Formaldehydkondensat) | | 3,4 |
| CBS (Vulkanisationsbeschleuniger) | | 0,65 |
| | | |
| Prüfungen: | | |
| Mooney 100° | ML1'+4' | 62,9 |
| t5 100°C | min. | > 60 |
| Rheometer 150°C | t90 min. | 8,2 |
| | | |
| Vulkanisation: 15 Minuten 150°C; Heißluftalterung: 72 Stunden 100°C | | |
| Shore A | ungealtert | 71 |
| | gealtert | 77 |
| | | |
| Zugfestigkeit | | |
| ungealtert | Fmax N/mm² | 20,97 |
| gealtert | Fmax N/mm² | 9,02 |
| | | |
| Bruchdehnung | | |
| ungealtert | % | 415,9 |
| gealtert | % | 152,8 |

| | | |
|---|---|---|
| ¹⁾ parts per hundred rubber | | |

## Patentansprüche

1. Verfahren zur Vulkanisierung von Kautschuk oder Latex durch Zusatz einer Mischung M, enthaltend eine Komponente a) aus
a1) 20 bis 96 Gew.-% Schwefel,
a2) 4 bis 80 Gew.-% eines Komplexbildners
und gegebenenfalls weitere Zusatzstoffe b)
zu Kautschuk oder Latex und anschließender Durchführung der Vulkanisierung, **dadurch gekennzeichnet, daß** die mittlere Teilchengröße der Primärteilchen der Komponente a) im Bereich von 0,05 bis 20 µm liegt.

2. Verfahren nach Anspruch 1, **dadurch gekennzeichnet, daß** der Komplexbildner a2) eine polymere Komplexbildnerverbindung enthält.

3. Verfahren nach den Ansprüchen 1 bis 2, **dadurch gekennzeichnet, daß** der polymere Komplexbildner a2) ein Ligninsulfonat, ein β-Naphthalinsulfonsäure-Formaldehydkondensat oder eine Mischung aus Ligninsulfonat und β-Naphthalinsulfonsäure-Formaldehydkondensat ist.

4. Verfahren nach den Ansprüchen 1 bis 3, **dadurch gekennzeichnet, daß** der polymere Komplexbildner a2) ein Alkalimetall- und/oder Erdalkalimetallligninsulfonat ist.

5. Verfahren nach den Ansprüchen 1 bis 4, **dadurch gekennzeichnet, daß** die Mischung M rieselfähig ist, mit einer mittleren Teilchengröße von 50 µm bis 4 mm.

6. Verfahren nach den Ansprüchen 1 bis 5, **dadurch gekennzeichnet, daß** die Mischung M eine flüssige Dispersion ist.

7. Verwendung einer Mischung M - wie in den Ansprüchen 1 bis 6 definiert - als Mittel zur Vulkanisierung von Kautschuk oder Latex.

8. Schwefelhaltige Zusammensetzung aus 20 bis 96 Gew.-% Schwefel und 4 bis 80 Gew.-% eines Komplexbildners, **dadurch gekennzeichnet, daß** die mittlere Teilchengröße der primärteilchen im Bereich von 0,05 bis 20 µm liegt.

9. Schwefelhaltige Zusammensetzung nach Anspruch 8, wobei der Komplexbildner eine polymere Komplexbildnerverbindung enthält.

10. Schwefelhaltige zusammensetzung nach den Ansprüchen 8 und 9, wobei der polymere Komplexbildner ein Ligninsulfonat, ein β-Naphthalinsulfonsäure-Formaldehydkondensat oder eine Mischung aus Ligninsulfonat und β-Naphthalinsulfonsäure-Formaldehydkondensat ist.

## Claims

1. A process for vulcanizing rubber or latex by adding a mixture M comprising a component a) made from
a1) from 20 to 96% by weight of sulfur,
a2) from 4 to 80% by weight of a complexer,
and, if appropriate, comprising other additives b),
to the rubber or latex and then carrying out the vulcanization, which comprises using a component a) whose average primary particle size is in the range from 0.05 to 20 µm.

2. The process according to claim 1, wherein the complexer a2) comprises a polymeric complexer compound.

3. The process according to claim 1 or 2, wherein the polymeric complexer a2) is a ligninsulfonate, a β-naphthalenesulfonic acid-formaldehyde condensate, or a mixture of ligninsulfonate and β-naphthalenesulfonic acid-formaldehyde condensate.

4. The process according to any of claims 1 to 3, wherein the polymeric complexer a2) is an alkali metal ligninsulfonate and/or an alkaline earth metal ligninsulfonate.

5. The process according to any of claims 1 to 4, wherein the mixture M is free-flowing with an average particle size of from 50 µm to 4 mm.

6. The process according to any of claims 1 to 5, wherein the mixture M is a liquid dispersion.

7. The use of a mixture M - as defined in any of claims 1 to 6 - as agent for vulcanizing rubber or latex.

8. A sulfur-containing composition made from 20 to 96% by weight of sulfur and from 4 to 80% by weight of a complexer, wherein the average primary particle size is in the range from 0.05 to 20 µm.

9. The sulfur-containing composition according to claim 8, where the complexer comprises a polymeric complexer compound.

10. The sulfur-containing composition according to claim 8 or 9, where the polymeric complexer is a ligninsulfonate, a β-naphthalensulfonic acid-formaldehyde condensate, or a mixture of ligninsulfonate and β-naphthalesulfonic acid-formaldehyde condensate.

## Revendications

1. Procédé de vulcanisation de caoutchouc ou de latex par addition au caoutchouc ou au latex d'un mélange M, contenant un composant a) à base
a1) de 20 à 96% en poids de soufre,
a2) de 4 à 80% en poids d'un agent complexant,
et éventuellement d'autres additifs b),
et mise en oeuvre ultérieure de la vulcanisation, **caractérisé en ce que** la taille moyenne des particules primaires du composant a) est de l'ordre de 0,05 à 20 µm.

2. Procédé suivant la revendication 1, **caractérisé en ce que** l'agent complexant a2) contient un composé complexant polymère.

3. Procédé suivant les revendications 1 et 2, **caractérisé en ce que** l'agent complexant polymère a2) est un ligninesulfonate, un produit de condensation d'acide β-naphtalènesulfonique et de formaldéhyde ou un mélange de ligninesulfonate et de produit de condensation d'acide β-naphtalènesulfonique et de formaldéhyde.

4. Procédé suivant les revendications 1 à 3, **caractérisé en ce que** l'agent complexant polymère a2) est un ligninesulfonate de métal alcalin et/ou de métal alcalino-terreux.

5. Procédé suivant les revendications 1 à 4, **caractérisé en ce que** le mélange M est capable de s'écouler avec une taille moyenne des particules de 50 µm à 4 mm.

6. Procédé suivant les revendications 1 à 5, **caractérisé en ce que** le mélange M est une dispersion fluide.

7. Utilisation d'un mélange M, tel que défini dans les revendications 1 à 6, comme produit de vulcanisation de caoutchouc ou de latex.

8. Composition contenant du soufre à base de 20 à 96% en poids de soufre et de 4 à 80% en poids d'un agent complexant, **caractérisée en ce que** la taille moyenne des particules primaires est de l'ordre de 0,05 à 20 µm.

9. Composition contenant du soufre suivant la revendication 8, dans laquelle l'agent complexant contient un composé complexant polymère.

10. Composition contenant du soufre suivant les revendications 8 et 9, dans laquelle l'agent complexant polymère est un ligninesulfonate, un produit de condensation d'acide β-naphtalènesulfonique et de formaldéhyde ou un mélange de ligninesulfonate et de produit de condensation d'acide β-napthalènesulfonique et de formaldéhyde.
